# EUROPÄISCHE PATENTANMELDUNG

(11) **EP 0 895 931 A1**
(43) Veröffentlichungstag der Anmeldung: **10.02.1999**
(21) Anmeldenummer: 98810652.2
(22) Anmeldetag: 09.07.1998
(51) Int. Cl.: B65B 23/12, B65G 47/90

(54) **Vorrichtung und Verfahren zum Transportieren von Produkten,insbesondere von Biskuits**

(30) Priorität: 05.08.1997 CH 1861/97
(71) Anmelder: SIG Pack Systems AG, 8222 Beringen (CH)
(72) Erfinder: Fluck, René, 8226 Schleitheim (CH)
(74) Vertreter: Münch, Otto

(57) **Zusammenfassung**

Ein schmales Förderband transportiert die Produkte (11) in einer Kolonne in Förderrichtung (A). Ein Fühler (16) erfasst den Durchlauf der Produkte (11) und steuert über eine Steuereinheit (15) Hubmotoren (18) derart, dass an deren Hubstange (19) unten angebrachte Auflagen (20) aus einer unteren Durchlaufstellung in eine obere Durchlaufstellung angehoben werden und dabei das betreffende Produkt (11) angehoben wird. Sobald alle Auflagen (20) angehoben sind, werden die Produkte (11) in Verpakkungsbehälter ausgestossen. Beim Absenken der Auflagen (20) werden diese gespreizt. Die Vorrichtung ermöglicht eine hohe Leistung bei schonender Handhabung der Produkte.

## Beschreibung

Die vorliegende Erfindung betrifft eine Vorrichtung und ein Verfahren zum Transportieren von Produkten, insbesondere flach liegend in einer Kolonne transportierte Biskuits. Mit der Vorrichtung sollen insbesondere nacheinander in Transportrichtung folgende Produkte erfasst werden, um sie z.B. gemeinsam in Verpakkungsbehälter zu übergeben.

Aus der EP-A-526 403 ist eine Vorrichtung mit mehreren hintereinander angeordneten Sauggreifen bekannt, welche auf einem Förderband angelieferte Biskuits gruppenweise oder einzeln erfassen können, um sie in Verpackungsschalen einzufüllen.

Der vorliegenden Erfindung liegt die Aufgabe zugrunde, die Leistungsfähigkeit einer solchen Transportvorrichtung zu steigern. Diese Aufgabe wird durch die Merkmalskombination der Ansprüche gelöst. Nachfolgend wird ein Ausführungsbeispiel der Erfindung anhand der Zeichnung erläutert. Darin zeigt:
- Figur 1: eine schematische Seitenansicht der Vorrichtung, und
- Figuren 2 bis 4: Querschnitte der Vorrichtung in verschiedenen Betriebsstellungen und Betriebsarten.

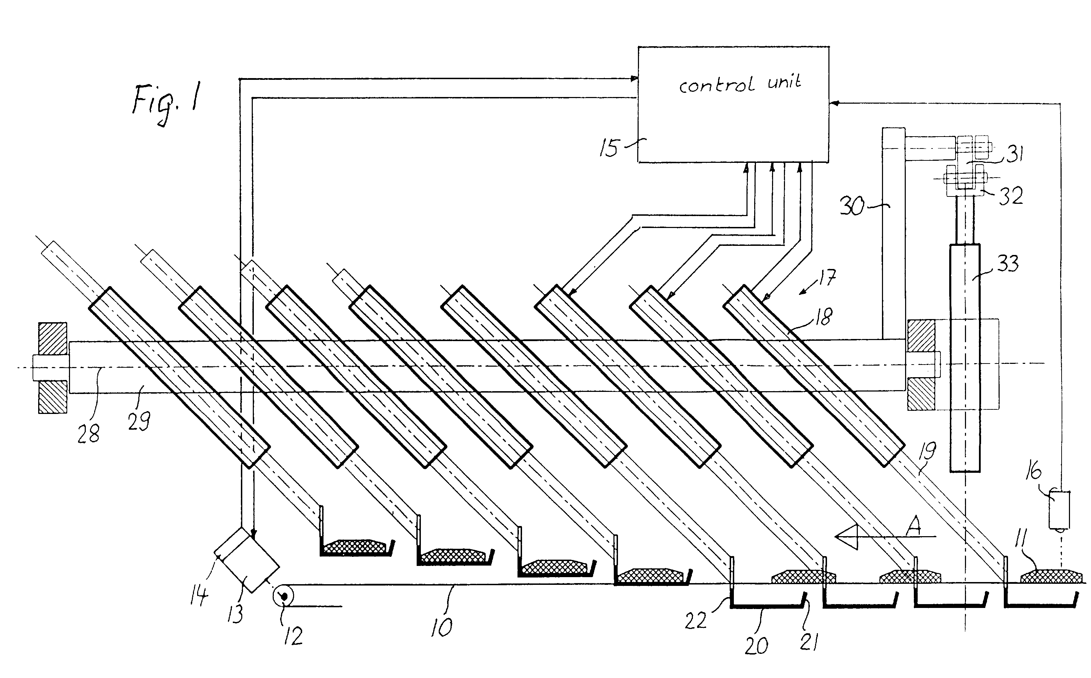

Auf einem schmalen, als Förderband 10 ausgebildeten Transportmittel werden Produkte 11 in einer Kolonne in der Förderrichtung A angeliefert. Die Produkte 11 überragen das Band 10 beidseitig. Eine Antriebsrolle 12 des Bandes 10 ist durch einen Motor 13 mit einem Drehwinkelgeber 14 angetrieben. Motor und Geber sind mit einer Steuereinheit 15 verbunden. Am stromaufwärtigen Ende des Bandes 10 ist ein Produktfühler 16, z.B. eine Lichtschranke angeordnet, welcher ebenfalls mit der Einheit 15 verbunden ist. Längs des Bandes 10 sind in regelmässigen Abständen paarweise Hebemittel 17 beidseits des Bandes 10 angeordnet. Im dargestellten Beispiel sind dies Linearmotoren 18 mit Wegrückführung, welche alle einzeln von der Einheit 15 gesteuert werden. Die Achse der Motoren 18 ist um 30° bis 60°, vorzugsweise um etwa 45° gegenüber der Ebene des oberen Trumms des Bandes 10 geneigt. Die Abtriebsstangen 19 der Motoren 18 tragen unten je eine Produktauflage in Form einer abgekröpften Platte 20 mit einem vorderen und hinteren Anschlag 21, 22. Die Platten 20 sind aus einer unteren, in Figur 1 rechts dargestellten Durchlaufstellung in eine links dargestellte obere Durchlaufstellung anhebbar. In beiden Durchlaufstellungen können die Produkte 11 durch das Band 10 ungehindert über bzw. unter den Platten 20 vorbeitransportiert werden.

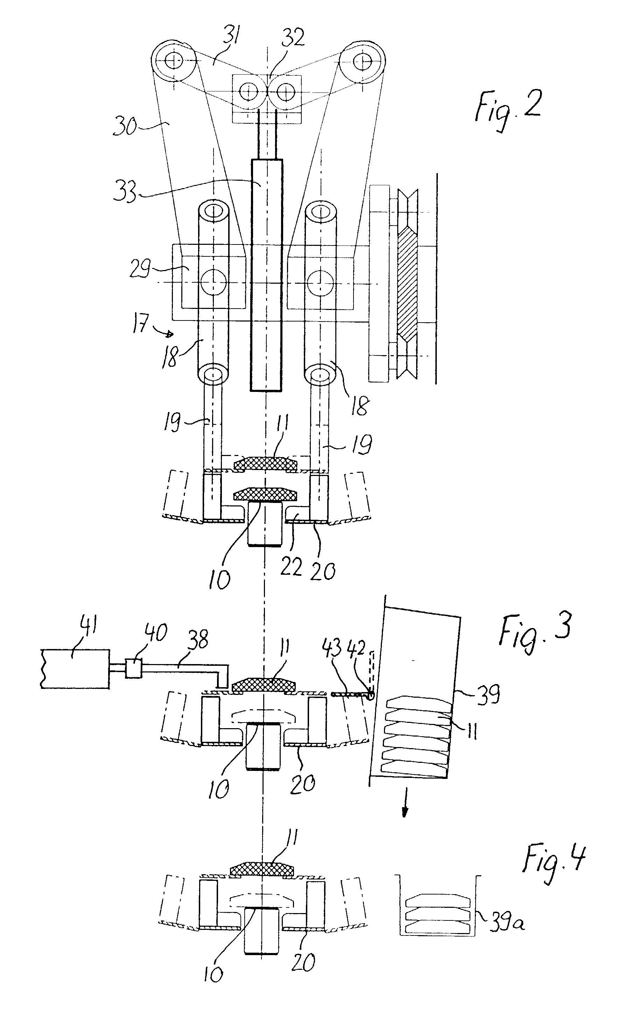

Die Motoren 18 sind in zwei parallelen, um horizontale Achsen 28 schwenkbaren Trägern 29 montiert. An den Trägern 29 ist je ein nach oben ragender Hebel 30 befestigt, dessen freies Ende über je eine Gelenkstange 31 mit einem vertikal beweglich geführten Block 32 verbunden ist. Der Block 32 wird durch einen weiteren Linearmotor 33 betätigt. Mittels dieses Motors 33 lassen sich die Träger 29 verschwenken, so dass die Bleche 20 beim Absenken voneinander weggeschwenkt werden, damit sie nicht die Bahn der Produkte 11 tangieren. Sobald die untere Durchlaufstellung erreicht ist, werden die Bleche 20 wieder in die in Figur 2 ausgezogen dargestellte Grundstellung eingeschwenkt, in welcher ihre Innenkante nur knapp ausserhalb der Aussenkante des Bandes 10 ist. Beim Anheben ergreifen sie daher ein direkt über ihnen befindliches Produkt 11 und heben es an. Der Motor 33 ist ebenfalls mit der Steuereinheit 15 verbunden.

Im Betrieb wird der Durchlauf jedes Produktes 11 durch den Fühler 16 erfasst und jeweils der stromabwärtigste Motor 18 mit noch nicht angehobener Stange 19 betätigt, sobald das Produkt 11 über der betreffenden Platte 20 eintrifft. Diese wird durch Aufsummieren des gemessenen Drehwinkels des Motors 13 ermittelt. Weil die Achsen der Motoren 18 geneigt sind, haben die Platten 20 beim Anheben eine Bewegungskomponente in Transportrichtung A. Dadurch wird ein schonendes Erfassen der Produkte 11 und eine hohe Leistung ermöglicht.

Wenn sämtliche Platten 20 angehoben sind, schieben Stössel 38 die Produkte 11 in Sammelbehälter 39. Die Stössel 38 sind an einem gemeinsamen, parallel geführten Träger 40 befestigt, der durch einen weiteren Motor 41 betätigt wird. Damit beim Ausstossen die Produkte 11 nicht in den Spalt zwischen den beiden Platten 20 fallen, ist es zweckmässig, die Platten 20 in der oberen Durchlaufstellung mittels des Motors 33 zusammenzurücken. Ferner kann es zweckmässig sein, beim Ausschieben eine seitliche, um eine Achse 42 schwenkbare Gleitplatte 43 herunterzuklappen.

Bei der Variante nach Figur 3 werden die Produkte 11 in Behälter 39 mit ihrer Flachseite senkrecht zum Behälterboden eingeschoben, wobei die Behälter 39 zwischen den Einschubschritten schrittweise abgesenkt werden. Bei der Variante nach Figur 4 werden die Produkte zu einem Stapel im Behälter 39a eingefüllt.

Die beschriebene Vorrichtung und das Transportverfahren ermöglichen bei hoher Leistung eine schonende Behandlung der Produkte 11. Am stromabwärtigen Ende des Bandes 10 kann eine weitere, gleiche Vorrichtung oder ein Sammelbehälter oder ein Speicher angeordnet werden, um z.B. bei einem Stop der Verpackungsmaschine auf dem Band 10 angelieferte Produkte 11 in die anschliessende weitere Vorrichtung zur Verarbeitung weiterzuleiten oder die Produkte 11 zu sammeln. Bei herkömmlichen Maschinen ist dieser Durchlauf von Produkten schwierig. Die Vorrichtung eignet sich auch für Produkte 11, die zur Saugoperation ungeeignet sind, z.B. wegen klebriger Oberseite.

Die Vorrichtung eignet sich auch für andere als flache, scheibenförmige Produkte, z.B. für kegelstumpfförmige Softcakes. In diesem Fall werden die Auflagen 20 bogenförmig ausgebildet und sind nicht Platten. Es ist auch möglich, die ganze Einheit, gebildet aus den Elementen 17 bis 22 und 28 bis 33, auf einem Träger zu montieren, der um eine Achse parallel zu den Achsen 28 schwenkbar ist. In diesem Fall können die Produkte 11 mittels der Hubelemente 17 direkt in Verpackungsbehälter abgesenkt werden. Allerdings ist dadurch die Leistung geringer.

## Patentansprüche

1. Vorrichtung zum Transportieren von Produkten (11), insbesondere von flach liegenden Biskuits, umfassend ein Transportmittel (10), auf dem die Produkte (11) hintereinander in einer Kolonne angeliefert werden, mehrere hintereinander angeordnete Hebemittel (17), die an beiden Seiten des Transportmittels (10) je eine Produktauflage (20) aufweisen, die aus einer unteren Durchlaufstellung, in welcher die Produkte (11) durch das Transportmittel (10) ungehindert über die Auflagen (20) hinwegförderbar sind, in eine angehobene Durchlaufstellung anhebbar sind, in welcher die Produkte (11) unterhalb der Auflagen (20) hindurchförderbar sind, und wobei die Auflagen (20) jedes Hebemittels (17) durch Querverstellmittel (29 bis 33) zumindest während eines Teils der Abwärtsbewegung quer verschiebbar sind, so dass sie einen grösseren Abstand voneinander haben als bei der Aufwärtsbewegung.

2. Vorrichtung nach Anspruch 1, wobei die Auflagen (20) im Bereich der Auflage-Auslaufseite erste Anschlagmittel (22) und vorzugsweise zusätzlich im Bereich der Auflage-Zufuhrseite zweite Anschlagmittel (21) aufweisen.

3. Vorrichtung nach Anspruch 2, wobei die Anschlagmittel (21, 22) mit den Auflagen (20) fest verbunden sind.

4. Vorrichtung nach einem der Ansprüche 1 bis 3, wobei die hintereinander angeordneten Hebemittel (17) Einzelantriebe (18) für die Hubbewegung aufweisen.

5. Vorrichtung nach Anspruch 4, wobei die Einzelantriebe (18) Linearmotoren mit Wegrückführung sind.

6. Vorrichtung nach einem der Ansprüche 1 bis 5, wobei die Hubrichtung der Hebemittel (17) mit der Förderrichtung (A) des Fördermittels (10) einen spitzen Winkel von vorzugsweise 30° bis 60°, insbesondere etwa 45 ° bilden.

7. Vorrichtung nach einem der Ansprüche 1 bis 6, wobei die obere Durchlaufstellung der Auflagen (20) im Bereich eines Querschiebers (38) angeordnet ist.

8. Vorrichtung nach einem der Ansprüche 1 bis 7, wobei im Bereich des Transportmittels (10) mindestens ein Produktfühler (16) angeordnet ist, der mit einer Steuereinheit (15) verbunden ist, welche das Transportmittel (10), die Hebemittel (17) und die Querverstellmittel (29 bis 33) steuert.

9. Verfahren zum Transportieren von Produkten (11), insbesondere flach liegenden Biskuits, wobei die Produkte (11) auf einem Transportmittel (10) hintereinander in einer Kolonne transportiert werden, wobei im Bereich des Transportmittels (10) mehrere Hebemittel (17) hintereinander angeordnet sind, die beidseits des Transportmittels (10) je eine Produkte-Auflage (20) haben, wobei die Auflagen (20) während des Transportes der Produkte (11) auf dem Transportmittel (10) aus einer unteren Durchlaufstellung in einer oberen Durchlaufstellung angehoben werden und dabei die Produkte (11) erfassen, und wobei nach dem Entleeren der Auflagen (20) diese wieder in die untere Durchlaufstellung abgesenkt und dabei auseinandergespreizt werden.

10. Verfahren nach Anspruch 9, wobei sämtliche Hebemittel (17) über eine Steuereinheit (15) auf das Signal eines Produktfühlers (16) einzeln angehoben werden.
